# EUROPEAN PATENT APPLICATION

(11) **EP 2 768 097 A1**
(43) Date of publication of application: **20.08.2014**
(21) Application number: 12850436.2
(22) Date of filing: 27.07.2012
(51) Int. Cl.: H02G 1/14, H01R 43/28, H02G 3/22, H01R 43/00

(54) **RUBBER PLUG PENETRATION DEVICE**

(30) Priority: 15.11.2011 JP 2011249716
(71) Applicant: Sumitomo Wiring Systems, Ltd., Yokkaichi-shi, Mie 510-8503 (JP)
(72) Inventor: GOTO Koichiro, Yokkaichi-shi Mie 510-8503 (JP); TSUCHIMOCHI Keiji, Yokkaichi-shi Mie 510-8503 (JP); SHIRAKAWA Junichi, Yokkaichi-shi Mie 510-8503 (JP)
(74) Representative: Horn Kleimann Waitzhofer
(86) International application number: PCT/JP2012/069089
(87) International publication number: WO 2013/073236

(57) **Abstract**

An object of the invention is to enable quick insertion of a wire into a rubber plug. A rubber plug penetration device includes a wire holding member holding an end portion of the wire in an orientation in which the end portion of the wire is pointed toward the rubber plug, a rubber plug holding member serving as a supply member having a rubber plug supply passage through which the rubber plug can be supplied, a wire inserting mechanism portion moving at least one of the wire and the rubber plug such that the wire and the rubber plug move relative to each other in a direction in which the wire and the rubber plug approach each other so that the end portion of the wire is inserted into an inner hole of the rubber plug, and a rubber plug restricting member. The rubber plug holding member is disposed so as to move between a first position at which a rubber plug accommodation hole faces an opening of the rubber plug supply passage at one end side of the rubber plug supply path and a second position at which the end portion of the wire lies on an extension of the central axis of the rubber plug accommodation hole. The rubber plug restricting member restricts a movement of the rubber plug held in the rubber plug accommodation hole in an insertion direction of the wire in a state in which the rubber plug holding member is located in the second position.

## Description

### Technical Field

The present invention relates to a technology for inserting a wire into a rubber plug.

### Background Art

An example of conventional devices for inserting a wire into a rubber plug is disclosed in Patent Document 1.

This rubber plug penetration device includes a rubber plug supply member having a penetrating hole portion and a rubber plug supply hole portion extending outward from the middle of the penetrating hole portion, a rubber plug holding member that holds the rubber plug in an opening of the penetrating hole portion at a first end side thereof, a pin member having a core pin main body portion that can be inserted into the penetrating hole portion, a pin support member that allows the pin member to retract by opening a movable accommodation space, a wire holding member that holds an end portion of a wire along an extension of the central axis of the core pin main body portion, and a wire inserting drive mechanism portion that moves the wire and the rubber plug such that the wire and the rubber plug move relative to each other in a direction in which the wire and the rubber plug approach each other so that the end portion of the wire is inserted into an inner hole of the rubber plug.

In this rubber plug penetration device, the rubber plug is pressure-fed by air from a rubber plug supply pipe toward the opening of the penetrating hole portion at the first end side thereof via the rubber plug supply hole portion and a middle portion of the penetrating hole portion, and the rubber plug is thus held in a rubber plug accommodation recess of the rubber plug holding member. Then, after the pin member is moved forward (toward the first end side of the penetrating hole portion), a distal end portion of the core pin main body portion is made to protrude from the pin member and pressure-fitted into the inner hole of the rubber plug within the rubber plug accommodation recess. When the rubber plug supply member, the rubber plug holding member, the pin member, and the pin support member are integrally moved toward the wire holding member by the driving of the wire inserting drive mechanism portion, the end portion of the wire is inserted into the inner hole of the rubber plug while coming into contact with the distal end portion of the core pin main body portion and causing the core pin main body portion and the pin member to be retracted. After the wire has been inserted into the rubber plug, a pair of holding portions of the rubber plug holding member is opened, and the wire holding member grips the wire and carries the wire together with the rubber plug to the outside as a finished component.

### Citation List

### Patent Documents

Patent Document 1: JP 2007-288966A

### Summary of Invention

### Technical Problem

In the above rubber plug penetration device, during insertion of the wire into the rubber plug, in order to stabilize the insertion position of the wire by suppressing a backward movement of the rubber plug to the side of the penetrating hole portion, the pin member is moved to the first end side of the penetrating hole portion before the core pin main body portion is pressure-fitted. However, since the penetrating hole portion has a long length in a front-rear direction, the time taken to move the pin member to the first end side of the penetrating hole portion is prolonged, resulting in a problem that it is difficult to quickly perform insertion of the wire into the rubber plug.

To address this issue, it is an object of the invention to enable quick insertion of a wire into a rubber plug.

### Solution to Problem

To solve the above problems, a rubber plug penetration device according to a first aspect is a rubber plug penetration device for inserting a wire into a rubber plug, the device including a supply member having a rubber plug supply path through which the rubber plug can be supplied, a wire holding member holding an end portion of the wire in an orientation in which the end portion of the wire is pointed toward the rubber plug, a rubber plug holding member having a rubber plug accommodation hole for holding the rubber plug, the rubber plug holding member being disposed so as to move between a first position at which the rubber plug accommodation hole faces an opening of the rubber plug supply path at one end side of the rubber plug supply path and a second position which is located laterally to the first position and at which the end portion of the wire lies on an extension of the central axis of the rubber plug accommodation hole, a wire inserting mechanism portion moving at least one of the wire and the rubber plug such that the wire and the rubber plug move relative to each other in a direction in which the wire and the rubber plug approach each other so that the end portion of the wire is inserted into an inner hole of the rubber plug, and a rubber plug restricting member restricting a movement of the rubber plug held in the rubber plug accommodation hole in an insertion direction of the wire in a state in which the rubber plug holding member is located in the second position.

A second aspect is the rubber plug penetration device according to the first aspect, wherein an abutting portion is formed in the rubber plug holding member, and a front end portion of the rubber plug can abut against the abutting portion in a state in which the rubber plug holding member is located in the second position and in a state in which the rubber plug holding member is moving between the first position and the second position.

A third aspect is the rubber plug penetration device according to the first or second aspect, wherein a hole portion into which the end portion of the wire inserted into the inner hole of the rubber plug is inserted is formed in the rubber plug restricting member, and a rear end portion of the rubber plug is inserted into the hole portion in a state in which the end portion of the wire is inserted into the inner hole of the rubber plug.

A fourth aspect is the rubber plug penetration device according to the first or second aspect, wherein a hole portion into which the end portion of the wire inserted into the inner hole of the rubber plug is inserted is formed in the rubber plug restricting member, an abutting portion is formed in a region around the hole portion of the rubber plug restricting member, and a rear end portion of the rubber plug can abut against the abutting portion in a state in which the end portion of the wire is inserted into the inner hole of the rubber plug.

A fifth aspect is the rubber plug penetration device according to any one of the first to fourth aspects, the device further including a wire guide member disposed between the wire holding member and the rubber plug holding member, the wire guide member guiding the end portion of the wire extending from the wire holding member along the extension of the central axis of the rubber plug accommodation hole.

A sixth aspect is the rubber plug penetration device according to the fifth aspect, wherein an abutting portion is formed in the wire guide member, and the front end portion of the rubber plug held in the rubber plug accommodation hole can abut against the abutting portion in a state in which the rubber plug holding member is located in the first position and in a state in which the rubber plug holding member is moving between the first position and the second position.

### Advantageous Effects of Invention

According to the first aspect, insertion of the wire into the rubber plug can be performed by moving the rubber plug holding member to the second position, which is located laterally to the first position, and during insertion of the wire into the rubber plug, the operation for suppressing a movement of the rubber plug in the insertion direction of the wire, such as the operation of advancing/retracting a core pin main body portion, is unnecessary. Therefore, insertion of the wire into the rubber plug can be performed quickly.

According to the second aspect, in a state in which the rubber plug holding member is located in the second position, it is possible to allow a rubber plug serving as the next insertion target to stand by with the front end portion of the rubber plug abutting against the abutting portion of the rubber plug holding member. Also, it is possible to smoothly move the rubber plug holding member from the second position to the first position with the front end portion of the rubber plug serving as the next insertion target abutting against the abutting portion of the rubber plug holding member, and thus the rubber plug serving as the next insertion target can be quickly held in the rubber plug accommodation hole. Therefore, insertion of wires into a plurality of rubber plugs can be performed quickly.

According to the third aspect, the wire is inserted into the rubber plug with the rear end portion of the rubber plug being inserted into the hole portion of the rubber plug restricting member. Thus, even in the case where a wire is inserted into an elongated rubber plug, the insertion position of the wire is stable, and the wire quality is improved.

According to the fourth aspect, since the wire is inserted into the rubber plug with the rear end portion of the rubber plug abutting against the abutting portion of the rubber plug restricting member, the insertion position of the wire is stable, and the wire quality is improved.

According to the fifth aspect, the wire can be accurately inserted into the rubber plug.

According to the sixth aspect, it is possible to smoothly move the rubber plug holding member from the first position to the second position while maintaining the rubber plug in a stable orientation with the front end portion of the rubber plug held in the rubber plug accommodation hole abutting against the abutting portion of the wire guide member. Therefore, insertion of the wire into the rubber plug can be performed quickly.

### Brief Description of Drawings

FIG. 1 is a front view showing a rubber plug penetration device serving as a part of cutting and crimping equipment according to a first embodiment.
FIG. 2 is an explanatory diagram showing the above rubber plug penetration device.
FIG. 3 is a block diagram showing a control unit of the above rubber plug penetration device.
FIG. 4 is a diagram showing the operation of the above rubber plug penetration device.
FIG. 5 is a diagram showing the operation of the above rubber plug penetration device.
FIG. 6 is a diagram showing the operation of the above rubber plug penetration device.
FIG. 7 is a diagram showing the operation of the above rubber plug penetration device.
FIG. 8 is an enlarged view of a relevant portion in FIG. 7.
FIG. 9 is a diagram showing the operation of the above rubber plug penetration device.
FIG. 10 is a diagram showing the operation of a rubber plug penetration device according to a second embodiment.
FIG. 11 is an enlarged view of a relevant portion in FIG. 10.

### Description of Embodiments

### First Embodiment

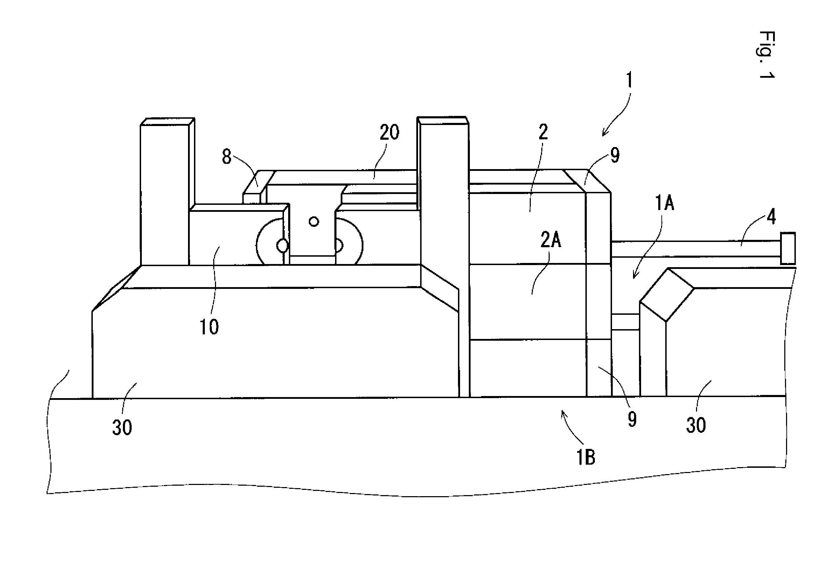

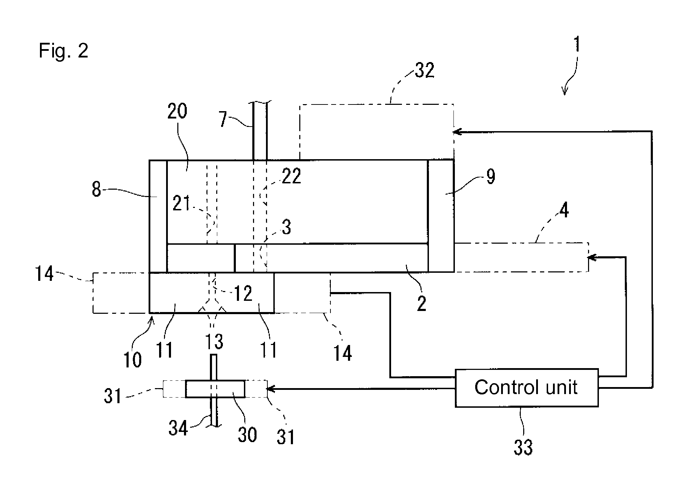

Hereinafter, a rubber plug penetration device 1 according to a first embodiment will be described. FIG. 1 is a front view showing the rubber plug penetration device serving as a part of cutting and crimping equipment, and FIG. 2 is an explanatory diagram showing the rubber plug penetration device 1.

Provided in the cutting and crimping equipment (not shown) are a parts feeder (not shown) that aligns the orientations of a plurality of rubber plugs, a dispensing device (not shown) that separates a plurality of rubber plugs supplied from the parts feeder and supplies the rubber plugs one by one, a cutting and crimping machine (not shown) that cuts a wire and crimps a terminal onto the wire, as well as the rubber plug penetration device 1, a rubber plug penetration device 1A, a rubber plug penetration device 1B, etc. that insert a wire into a rubber plug. It should be noted that the rubber plug penetration device 1, the rubber plug penetration device 1A, and the rubber plug penetration device 1B are different devices that insert wires into different types of rubber plugs. The rubber plug penetration device 1 will be described in the first embodiment. The rubber plug penetration device 1A will be described in a second embodiment. The rubber plug penetration device 1B has substantially the same structure as the rubber plug penetration device 1 or the rubber plug penetration device 1A, and therefore a description thereof is omitted.

Now, the rubber plug penetration device 1 will be described. The rubber plug penetration device 1 is a device that inserts a wire 34 into a rubber plug 35. The rubber plug penetration device 1 includes a rubber plug restricting member 20 having a rubber plug supply passage 22 (rubber plug supply path) communicating with a rubber plug supply pipe 7, a rubber plug holding member 2, a wire holding member 30, a wire guide member 10, and a wire inserting drive mechanism portion 32. The rubber plug restricting member 20 and the rubber plug holding member 2 are coupled to each other by a pair of left and right coupling members 8 and 9 such that the rubber plug holding member 2 is movable in a width direction thereof. It should be noted that the rubber plug restricting member 20 corresponds to a supply member. Alternatively, it is possible to provide a supply member separately from the rubber plug restricting member 20 and form the rubber plug supply path in this supply member.

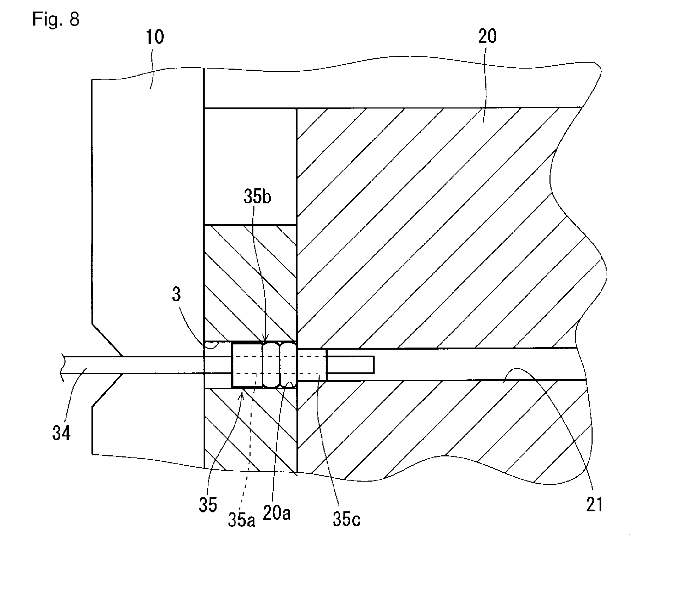

As shown in FIG. 8, the rubber plug 35 is an elongated tubular member formed of an elastic member such as rubber, and an inner hole 35a is formed inside the rubber plug 35. The rubber plug 35 has a tubular main body portion 35b and a tubular small diameter portion 35c protruding from one end of the main body portion 35b. The inner hole 35a is formed to have such a dimension that allows an inner circumferential surface of the inner hole 35a to come into close contact with an outer circumferential surface of the wire 34 in a state in which the wire 34 is inserted into the inner hole 35a. The rubber plug 35 has a function of preventing entry of water along the wire 34 in a state in which the wire 34 is installed in a predetermined component or device.

The rubber plug supply pipe 7 is a pipe-shaped member for supplying the rubber plug 35. The rubber plug supply pipe 7 is formed to have an inner diameter that is larger than the outer diameter of the rubber plug 35 and smaller than a projected shape of the rubber plug 35 that is projected laterally so that a plurality of rubber plugs 35 can pass through the rubber plug supply pipe 7 while maintaining a fixed orientation. In the rubber plug supply pipe 7, rubber plugs 35 are supplied one by one by the dispensing device, and air is supplied by an air supply means, which is not shown. It should be noted that in this embodiment, during operation of the rubber plug penetration device 1, air is continuously supplied by the air supply means, but air may also be periodically supplied at predetermined timings.

The rubber plug restricting member 20 is a member for restricting a movement of the rubber plug 35 in an insertion direction of the wire 34 during insertion of the wire 34 into the rubber plug 35 held in a rubber plug accommodation hole 3, which will be described later. In the rubber plug restricting member 20, the rubber plug supply passage 22 communicating with the rubber plug supply pipe 7 and a penetrating hole portion 21 (hole portion) into which an end portion of the wire 34 inserted in the inner hole 35a of the rubber plug 35 is inserted during insertion of the wire 34 into the rubber plug 35 are formed, each extending in the front-rear direction.

The rubber plug supply passage 22 is formed to have an inner diameter that is larger than the outer diameter of the rubber plug 35 and smaller than the projected shape of the rubber plug 35 that is projected laterally so that a plurality of rubber plugs 35 can pass through the rubber plug supply passage 22 while maintaining a fixed orientation.

The penetrating hole portion 21 is formed to have a diameter that is larger than (in this embodiment, that is slightly larger than) the outer diameter of the small diameter portion 35c (rear end portion) of the rubber plug 35 and smaller than the outer diameter of the main body portion 35b of the rubber plug 35 so that the small diameter portion 35c of the rubber plug 35 can be inserted into the penetrating hole portion 21 in a state in which the end portion of the wire 34 is inserted into the inner hole 35a of the rubber plug 35. Thus, the main body portion 35b of the rubber plug 35 is prevented from being inserted into the penetrating hole portion 21. Also, in a region around an opening of the penetrating hole portion 21 of the rubber plug restricting member 20 on a front end side of the penetrating hole portion 21, an abutting portion 20a (see FIG. 8) is formed, and a base end portion of the main body portion 35b of the rubber plug 35 can abut against the abutting portion 20a in a state in which the small diameter portion 35c of the rubber plug 35 is inserted into the penetrating hole portion 21.

The rubber plug holding member 2 is a member that holds a rubber plug 35 that has been pressure-fed from the rubber plug supply pipe 7 via the rubber plug supply passage 22. In the rubber plug holding member 2, the rubber plug accommodation hole 3 for accommodating and holding the rubber plug 35 that has been pressure-fed from the rubber plug supply pipe 7 via the rubber plug supply passage 22 is formed, extending in the front-rear direction. The rubber plug accommodation hole 3 is formed into a shape conforming to the outer circumferential shape of the rubber plug 35, and in a state in which the rubber plug holding member 2 is located in a first position, which will be described later, the rubber plug 35 is held in a substantially fixed orientation with an opening of the inner hole 35a of the rubber plug 35 at a rear end side of the inner hole 35a facing an opening of the rubber plug supply passage 22 at a front end side thereof. On the other hand, in a state in which the rubber plug holding member 2 is located in a second position, which will be described later, the rubber plug 35 is held in a substantially fixed orientation with the opening of the inner hole 35a of the rubber plug 35 at the rear end side of the inner hole 35a facing the opening of the penetrating hole portion 21 of the rubber plug restricting member 20 at the front end side of the penetrating hole portion 21.

It should be noted that as long as the small diameter portion 35c of the rubber plug 35 can be inserted into the penetrating hole portion 21 of the rubber plug restricting member 20, the rubber plug accommodation hole 3 may also be formed into a shape that is more or less larger than the rubber plug 35 such that the rubber plug 35 can more or less move within the rubber plug accommodation hole 3.

The rubber plug holding member 2 is provided with a rubber plug holding drive mechanism portion 4. The rubber plug holding drive mechanism portion 4 allows the rubber plug holding member 2 to move between the first position at which the rubber plug accommodation hole 3 faces the opening of the rubber plug supply passage 22 at the front end side thereof and the second position which is located laterally to the first position and at which the end portion of the wire 34 lies on the extension of the central axis of the rubber plug accommodation hole 3. Here, the first position is a position at which the rubber plug 35 that has been supplied from the rubber plug supply pipe 7 via the rubber plug supply passage 22 is taken into and held in the rubber plug accommodation hole 3. The second position is a position at which the rubber plug 35 is held in the rubber plug accommodation hole 3 so that the wire 34 can be inserted into the inner hole 35a of the rubber plug 35. The rubber plug holding drive mechanism portion 4 is configured by a drive mechanism including a well-known actuator such as an air cylinder or a linear motor. It should be noted that it is also possible to adopt a rotary rubber plug holding member and adopt a configuration in which the rubber plug holding member moves between the first and second positions along a circular path.

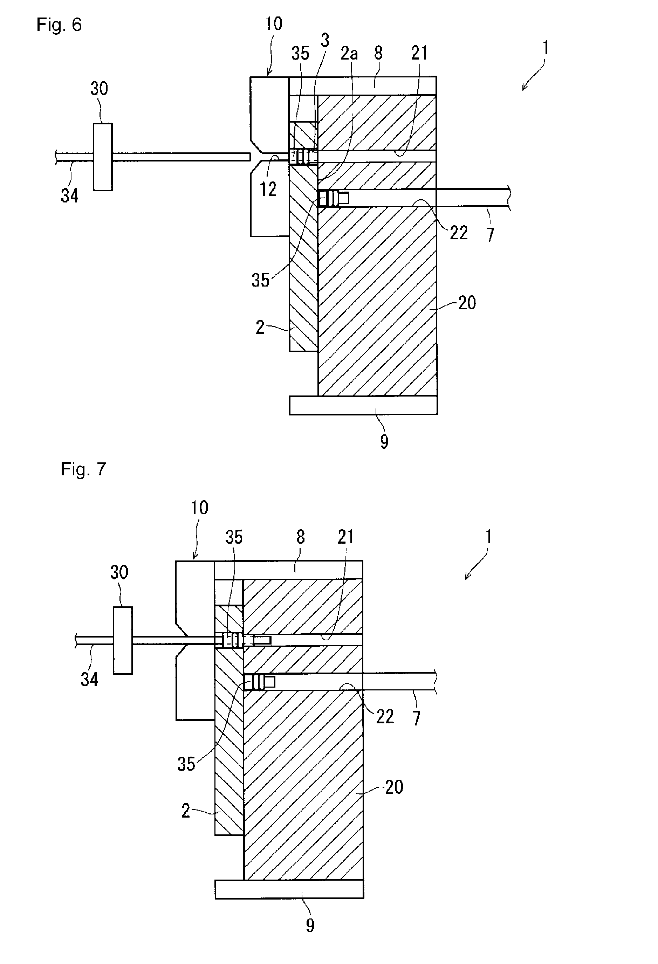

An abutting portion 2a (see FIG. 6) is formed on a rear surface of the rubber plug holding member 2. A distal end portion (front end portion) of the main body portion 35b of the rubber plug 35 can abut against the abutting portion 2a in a state in which the rubber plug holding member 2 is located in the second position and in a state in which the rubber plug holding member 2 is moving between the first position and the second position. Accordingly, when the rubber plug holding member 2 is located in the second position, it is possible to allow the next target rubber plug 35 that has been supplied from the rubber plug supply pipe 7 via the rubber plug supply passage 22 to stand by within the rubber plug supply passage 22 while abutting against the abutting portion 2a. Furthermore, after the wire 34 has been inserted into the rubber plug 35, the rubber plug holding member 2 can smoothly move between the first position and the second position with the distal end portion of the main body portion 35b of the next target rubber plug 35 abutting against the abutting portion 2a. It should be noted that in order to allow a plurality of rubber plugs 35 to stand by, the distal end portion of the main body portion 35b of a rubber plug 35 that comes after a rubber plug currently abutting against the abutting portion 2a is made to abut against a distal end portion of the small diameter portion 35c of the rubber plug currently abutting against the abutting portion 2a, and in this manner, it is possible to allow the plurality of rubber plugs 35 to stand by within the rubber plug supply passage 22.

The wire guide member 10 is provided between the wire holding member 30 and the rubber plug holding member 2 and is a member for guiding the wire 34 from the front side of the rubber plug holding member 2 along an extension of the central axis of the rubber plug accommodation hole 3 in a state in which the rubber plug holding member 2 is located in the second position. The wire guide member 10 has a pair of guide portions 11 and a wire guiding drive mechanism portion 14 and is configured so that the wire guiding drive mechanism portion 14 can open/close the pair of guide portions 11. A wire insertion hole 12 into which the wire 34 can be inserted is formed between the pair of guide portions 11, and a tapered guide surface 13 surrounding the wire insertion hole 12 and spreading outward with its diameter gradually increasing is formed.

The dimension of the wire insertion hole 12 in the diameter direction of the wire 34 varies depending on the open/close state of the pair of guide portions 11. In the initial state and during wire insertion, the pair of guide portions 11 is made to approach each other so that the distance therebetween becomes slightly larger than the diameter of the wire 34. When the wire 34 and the rubber plug 35 are to be taken out as a finished component, the pair of guide portions 11 is opened so that the dimension of the wire insertion hole 12 in the diameter direction of the wire 34 becomes larger than the outer diameter of the rubber plug 35.

In a state in which the rubber plug holding member 2 is located in the second position, the wire insertion hole 12 is located on an extension line of the rubber plug accommodation hole 3. Accordingly, the end portion of the wire 34 passes through the wire insertion hole 12 and is guided toward the inner hole 35a of the rubber plug 35 within the rubber plug accommodation hole 3. At this time, even when the wire 34 is more or less bent with its distal end portion being in an eccentric position with respect to the wire insertion hole 12, the end portion of the wire 34 slides on the tapered guide surface 13 and is guided toward the wire insertion hole 12. The wire guiding drive mechanism portion 14 is configured by a drive mechanism including a well-known actuator such as an air cylinder or a linear motor.

An abutting portion 10a is formed on a rear surface of the wire guide member 10. The distal end portion of the main body portion 35b of the rubber plug 35 held in the rubber plug accommodation hole 3 can abut against the abutting portion 10a in a state in which the rubber plug holding member 2 is located in the first position and in a state in which the rubber plug holding member 2 is moving between the first position and the second position. Thus, the rubber plug holding member 2 can smoothly move between the first position and the second position with the distal end portion of the main body portion 35b abutting against the abutting portion 10a.

The wire holding member 30 is provided in front of the wire guide member 10 and holds the end portion of the wire 34 in an orientation in which the wire 34 is pointed toward the wire insertion hole 12 of the wire guide member 10 and the rubber plug 35 held in the rubber plug accommodation hole 3. The wire holding member 30 has the wire holding drive mechanism portion 31 and is configured to sandwich and hold the wire 34 between a pair of gripping portions, which is not shown, by the driving of the wire holding drive mechanism portion 31. The wire holding drive mechanism portion 31 is configured by a drive mechanism including a well-known actuator such as an air cylinder or a linear motor.

The wire inserting drive mechanism portion 32 is a drive mechanism for inserting the end portion of the wire 34 into the inner hole 35a of the rubber plug 35 by moving the rubber plug 35 to the side of the wire 34, and is configured by a drive mechanism including a well-known actuator such as an air cylinder or a linear motor. According to this embodiment, the rubber plug holding member 2, the rubber plug supply pipe 7, the wire guide member 10, and the rubber plug restricting member 20 are integrally moved to the side of the wire 34. It should be noted that the details of the operation during insertion of the end portion of the wire 34 into the inner hole 35a of the rubber plug 35 will be described later.

It should be noted that it is also possible to move the wire 34 to the side of the rubber plug 35, instead of moving the rubber plug 35. That is to say, various configurations capable of moving the wire 34 and the rubber plug 35 relative to each other to make them approach each other can be adopted as the wire inserting drive mechanism portion 32.

The dispensing device has a dispensing drive mechanism portion, which is not shown, and separates a plurality of rubber plugs 35 supplied from the parts feeder and supplies the rubber plugs 35 one by one to the rubber plug supply pipe 7 by the driving of the dispensing drive mechanism portion. The dispensing drive mechanism portion is configured by a drive mechanism including a well-known actuator such as an air cylinder or a linear motor. The rubber plug holding drive mechanism portion 4, the wire guiding drive mechanism portion 14, the wire holding drive mechanism portion 31, the wire inserting drive mechanism portion 32, the dispensing drive mechanism portion, etc. perform the following operation under the control of the control unit 33.

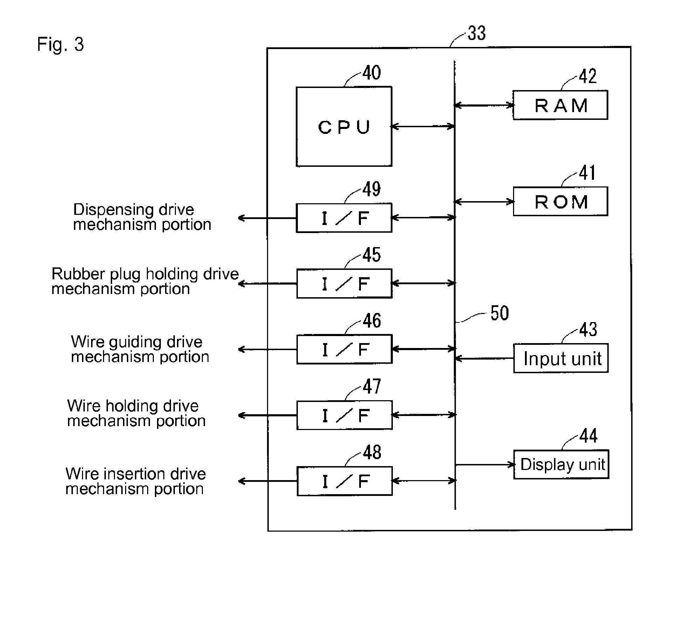

Next, the control unit 33 will be described. FIG. 3 is a block diagram showing the control unit 33. The control unit 33 is configured by a common computer in which a CPU 40, a ROM 41, a RAM 42, an input unit 43, a display unit 44, external connection interfaces 45 to 49, etc. are connected to one another via a bus line 50.

The CPU 40 controls the various drive mechanism portions by performing arithmetic processing in accordance with a control program stored in the ROM 41.

In the ROM 41, a control program etc. for controlling the various drive mechanism portions including the rubber plug holding drive mechanism portion 4, the wire guiding drive mechanism portion 14, the wire holding drive mechanism portion 31, the wire inserting drive mechanism portion 32, the dispensing drive mechanism portion, etc. is stored.

The RAM 42 is used as a working area when the CPU 40 performs predetermined processing.

The input unit 43 is configured by a plurality of switches, a touch panel, etc., and is capable of accepting various instructions, various settings, and the like given to the control unit 33.

The display unit 44 is a liquid crystal display or the like, and is capable of displaying various types of information such as a settings screen for the control unit 33 and a work screen.

When the control program is executed, the control unit 33 gives commands to the various drive mechanism portions based on the control program, and thus the following operation is performed. The gripping portions of the wire holding member 30 are closed to grip the wire 34 by the driving of the wire holding drive mechanism portion 31, and a single rubber plug 35 is supplied to the rubber plug supply pipe 7 by the driving of the dispensing drive mechanism portion.

Then, the rubber plug holding member 2 is moved from the first position to the second position by the driving of the rubber plug holding drive mechanism portion 4. After the movement of the rubber plug holding member to the second position has been completed, another rubber plug 35 is supplied to the rubber plug supply pipe 7 by the driving of the dispensing drive mechanism portion, and the rubber plug supply pipe 7, the rubber plug restricting member 20, the rubber plug holding member 2, and the wire guide member 10 are moved forward by the driving of the wire inserting drive mechanism portion 32, so that the wire 34 is inserted into the rubber plug 35. After the insertion of the wire 34 into the rubber plug 35 has been completed, the guide portions 11 are opened by the driving of the wire guiding drive mechanism portion 14, and the rubber plug supply pipe 7, the rubber plug restricting member 20, the rubber plug holding member 2, and the wire guide member 10 are moved rearward by the driving of the wire inserting drive mechanism portion 32, so that the wire 34 is taken out together with the rubber plug 35.

Subsequently, by the driving of the wire holding drive mechanism portion 31, the gripping portions of the wire holding member 30 are opened to replace the wire 34, and afterward, the gripping portions are closed to grip a wire 34 to be inserted next. The rubber plug holding member 2 is moved from the second position to the first position by the driving of the rubber plug holding drive mechanism portion 4, and the guide portions 11 are closed until the inner diameter of the wire insertion hole 12 becomes slightly larger than the diameter of the wire 34 by the driving of the wire guiding drive mechanism portion 14. Then, the above-described processing is repeatedly performed.

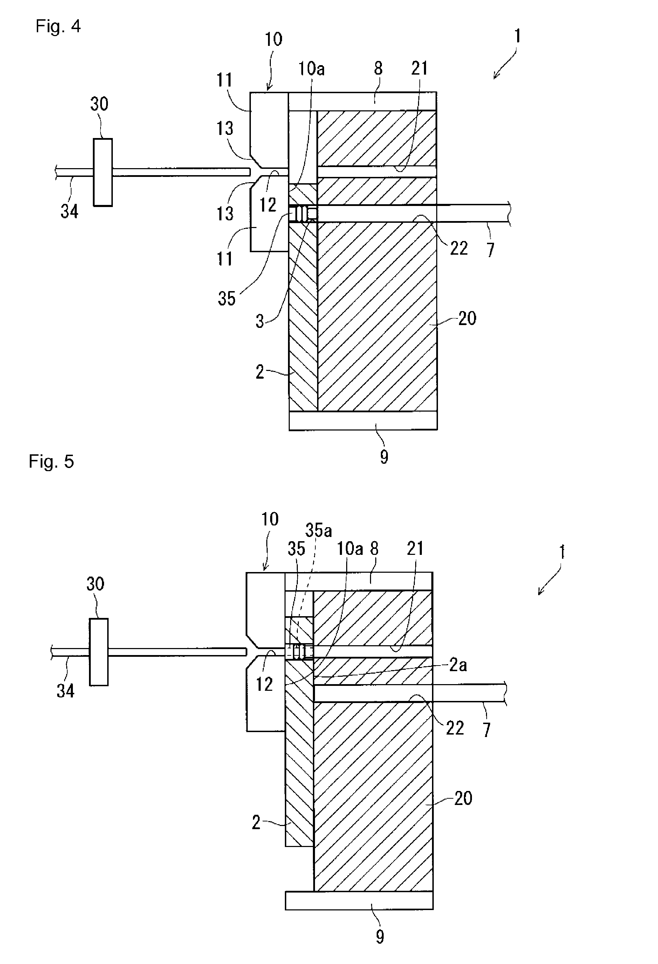

The operation of the rubber plug penetration device 1 having the above-described configuration will be described. FIGS. 4 to 7 and 9 are diagrams showing the operation of the rubber plug penetration device 1, and FIG. 8 is an enlarged view of a relevant portion in FIG. 7.

First, in the initial state, the rubber plug holding member 2 is located in the first position, as shown in FIG. 4. In this state, a single rubber plug 35 is pressure-fed from the rubber plug supply pipe 7 via the rubber plug supply passage 22 by the driving of the dispensing drive mechanism portion and thus held in the rubber plug accommodation hole 3 of the rubber plug holding member 2. At this time, the distal end portion of the main body portion 35b of the rubber plug 35 abuts against the abutting portion 10a of the wire guide member. Also, a wire 34 supplied by a wire supply mechanism portion, which is not shown, is held by the wire holding member 30.

Then, as shown in FIG. 5, the rubber plug holding member 2 is moved to the second position by the driving of the rubber plug holding drive mechanism portion 4 with the distal end portion of the main body portion 35b of the rubber plug 35 abutting against the abutting portion 10a of the wire guide member. Thus, the wire insertion hole 12, the rubber plug accommodation hole 3, and the penetrating hole portion 21 are made to communicate with one another, and the rubber plug 35 is in position. At this time, as shown in FIG. 6, when a rubber plug 35 serving as the next insertion target is pressure-fed from the rubber plug supply pipe 7 by the driving of the dispensing drive mechanism portion, the distal end portion of the main body portion 35b of that rubber plug 35 abuts against the abutting portion 2a of the rubber plug holding member 2, and the rubber plug 35 is allowed to stand by in the vicinity of the opening of the rubber plug supply passage 22 at the front end side thereof.

The rubber plug supply pipe 7, the rubber plug restricting member 20, the rubber plug holding member 2, and the wire guide member 10 are integrally moved toward the wire holding member 30 by the driving of the wire inserting drive mechanism portion 32. As a result, as shown in FIGS. 7 and 8, the end portion of the wire 34 is inserted into the inner hole 35a of the rubber plug 35 via the wire insertion hole 12 and the rubber plug accommodation hole 3. During insertion of the wire 34 into the rubber plug 35, the end portion of the wire 34 pushes the rubber plug 35 rearward. Thus, the small diameter portion 35c of the rubber plug 35 is inserted into the penetrating hole portion 21, and the base end portion of the main body portion 35b of the rubber plug 35 abuts against the abutting portion 20a of the rubber plug restricting member 20. Thus, a rearward movement of the rubber plug 35 is restricted, and the wire 34 is inserted sufficiently until the wire 34 penetrates the inner hole 35a of the rubber plug 35.

Here, during insertion of the wire 34 into the elongated rubber plug 35, even in the case where the rubber plug accommodation hole 3 is formed into a shape that is more or less larger than the rubber plug 35, and the rubber plug 35 is formed into such a size that allows the rugger plug 35 to more or less move within the rubber plug accommodation hole 3, the central axis of the inner hole 35a of the rubber plug 35 is not offset from the central axis of the rubber plug accommodation hole 3 because the small diameter portion 35c of the rubber plug 35 is inserted into the penetrating hole portion 21.

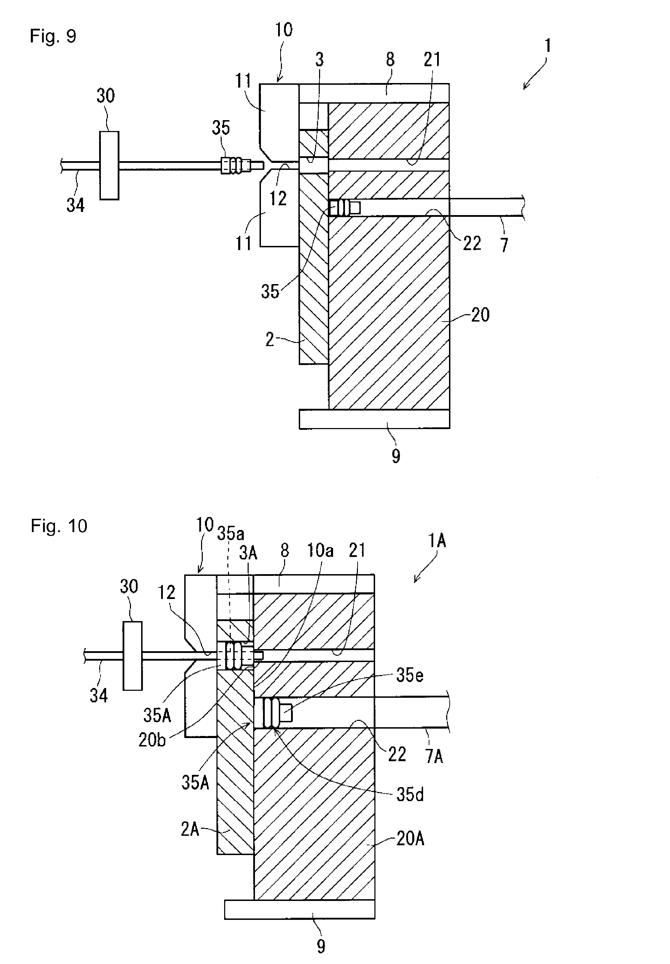

After the wire 34 has been inserted into the rubber plug 35 as described above, as shown in FIG. 9, in a state in which the pair of guide portions 11 of the wire guide member 10 is opened so that the guide portions 11 are spaced apart, the wire holding member 30 grips the wire 34 and carries the wire 34 together with the rubber plug 35 to the outside as a finished component. After that, as shown in FIG. 4, the pair of guide portions 11 of the wire guide member 10 is made to approach each other, and the rubber plug holding member 2 is moved to the first position by the driving of the rubber plug holding drive mechanism portion 4. Then, the rubber plug 35 serving as the next insertion target, which has been allowed to stand by within the rubber plug supply passage 22, is held in the rubber plug accommodation hole 3.

With the rubber plug penetration device 1 having the above-described configuration, insertion of the wire 34 into the rubber plug 35 can be performed by moving the rubber plug holding member 2 to the second position, which is located laterally to the first position, and furthermore, during insertion of the wire 34 into the rubber plug 35, the operation for suppressing a movement of the rubber plug 35 in the insertion direction of the wire 34, such as the operation of advancing/retracting a core pin main body portion, is unnecessary. Therefore, insertion of the wire 34 into the rubber plug 35 can be performed quickly.

In a state in which the rubber plug holding member 2 is located in the second position, it is possible to allow a rubber plug 35 serving as the next insertion target to stand by with the distal end portion of the main body portion 35b of the rubber plug 35 abutting against the abutting portion 2a of the rubber plug holding member 2. Also, it is possible to smoothly move the rubber plug holding member 2 from the second position to the first position with the distal end portion of the main body portion 35b of the rubber plug 35 serving as the next insertion target abutting against the abutting portion 2a of the rubber plug holding member 2. Thus, the rubber plug 35 serving as the next insertion target can be quickly held in the rubber plug accommodation hole 3. Therefore, insertion of wires 34 into a plurality of rubber plugs 35 can be performed quickly.

Since the wire 34 is inserted into the rubber plug 35 in a state in which the small diameter portion 35c of the rubber plug 35 is inserted into the penetrating hole portion 21 of the rubber plug restricting member 20, even in the case where the wire 34 is inserted into the elongated rubber plug 35, the insertion position of the wire 34 is stable, and the quality of the wire 34 is improved. The provision of the wire guide member 10, which is disposed between the wire holding member 30 and the rubber plug holding member 2 and guides the end portion of the wire 34 extending from the wire holding member 30 along the extension of the central axis of the rubber plug accommodation hole 3, enables the wire 34 to be accurately inserted into the rubber plug 35.

Since the abutting portion 10a is formed in the wire guide member 10, and the distal end portion of the main body portion 35b of the rubber plug 35 held in the rubber plug accommodation hole 3 can abut against the abutting portion 10a in a state in which the rubber plug holding member 2 is located in the first position and in a state in which the rubber plug holding member 2 is moving between the first position and the second position, it is possible to smoothly move the rubber plug holding member 2 from the first position to the second position while maintaining the rubber plug 35 held in the rubber plug accommodation hole 3 in a stable orientation with the distal end portion of the main body portion 35b of the rubber plug 35 abutting against the abutting portion 10a of the wire guide member 10. Therefore, insertion of the wire 34 into the rubber plug 35 can be performed quickly.

### Second Embodiment

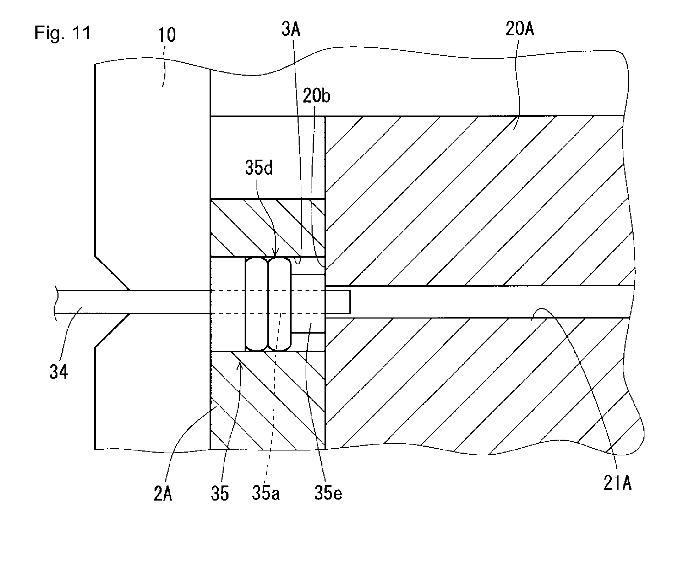

Now, the rubber plug penetration device 1A according to the second embodiment will be described. FIG. 10 is a diagram showing the operation of the rubber plug penetration device 1A according to the second embodiment, and FIG. 11 is an enlarged view of a relevant portion in FIG. 10. It should be noted that in the description of this embodiment below, the same constituent elements as those described in the first embodiment are denoted by the same reference numerals, and descriptions thereof are omitted.

The rubber plug penetration device 1A is a device that inserts the wire 34 into a rubber plug 35A. The rubber plug 35A is formed of an elastic member such as rubber and is a tubular member having a larger diameter than the rubber plug 35 of the first embodiment, and an inner hole 35a is formed inside the rubber plug 35A. The rubber plug 35A has a tubular main body portion 35d and a tubular small diameter portion 35e extending from one end of the main body portion 35d.

The rubber plug penetration device 1A includes a rubber plug supply pipe 7A, a rubber plug restricting member 20A, a rubber plug holding member 2A, the wire holding member 30, the wire guide member 10, and the wire inserting drive mechanism portion 32.

The rubber plug supply pipe 7A is formed to have an inner diameter that is larger than the outer diameter of the rubber plug 35A and smaller than a projected shape of the rubber plug 35A that is projected laterally so that a plurality of rubber plugs 35A can pass through the rubber plug supply pipe 7A while maintaining a fixed orientation.

In the rubber plug restricting member 20A, a rubber plug supply passage 22A communicating with the rubber plug supply pipe 7A and the penetrating hole portion 21 are formed, each extending in the front-rear direction. An abutting portion 20b is formed in a region around an opening of the penetrating hole portion 21 of the rubber plug restricting member 20A on the front end side of the penetrating hole portion 21. A distal end portion (rear end portion) of the small diameter portion 35e of the rubber plug 35A can abut against the abutting portion 20b in a state in which the end portion of the wire 34 is inserted into the inner hole 35a of the rubber plug 35A. The rubber plug supply passage 22A is formed to have an inner diameter that is larger than the outer diameter of the rubber plug 35A and smaller than the projected shape of the rubber plug 35A that is projected laterally so that a plurality of rubber plugs 35A can pass through the rubber plug supply passage 22A while maintaining a fixed orientation. The penetrating hole portion 21 is formed to have a diameter that is smaller than the outer diameter of the small diameter portion 35e of the rubber plug 35A. Thus, the distal end portion of the small diameter portion 35e of the rubber plug 35A abuts against the abutting portion 20b, preventing the small diameter portion 35e of the rubber plug 35A from being inserted into the penetrating hole portion 21.

A rubber plug accommodation hole 3A is formed in the rubber plug holding member 2A. The rubber plug accommodation hole 3A is formed into a shape conforming to the outer circumferential shape of the rubber plug 35A. It should be noted that as long as the distal end portion of the small diameter portion 35e of the rubber plug 35A can abut against the abutting portion 20b, the rubber plug accommodation hole 3A may also be formed into a shape that is more or less larger than the rubber plug 35A such that the rubber plug 35A can more or less move within the rubber plug accommodation hole 3A.

Next, the operation of the rubber plug penetration device 1A will be described, but only the differences from the first embodiment will be described. A rubber plug 35A that has been pressure-fed from the rubber plug supply pipe 7A via the rubber plug supply passage 22A is held in the rubber plug accommodation hole 3A, and the rubber plug holding member 2A is moved from the first position to the second position by the driving of the rubber plug holding drive mechanism portion 4 with the distal end portion of the main body portion 35d of the rubber plug 35A abutting against the abutting portion 10a. Then, the rubber plug supply pipe 7A, the rubber plug restricting member 20A, the rubber plug holding member 2A, and the wire guide member 10 are integrally moved toward the wire holding member 30 by the driving of the wire inserting drive mechanism portion 32. As a result, the end portion of the wire 34 is inserted into the inner hole 35a of the rubber plug 35A via the wire insertion hole 12 and the rubber plug accommodation hole 3A. During insertion of the wire 34 into the rubber plug 35A, the distal end portion of the small diameter portion 35e of the rubber plug 35A abuts against the abutting portion 20b of the rubber plug restricting member 20. Thus, a rearward movement of the rubber plug 35A is restricted, and the wire 34 is sufficiently inserted until the wire 34 penetrates the inner hole 35a of the rubber plug 35A.

Here, since the small diameter portion 35e of the rubber plug 35A is formed to have a larger diameter than the small diameter portion 35c of the first embodiment, the abutting portion 20b can stop the small diameter portion 35e of the rubber plug 35A with a wider area. Thus, unlike the first embodiment, even without a structure of inserting the small diameter portion 35e into the penetrating hole portion 21, the central axis of the inner hole 35a of the rubber plug 35A is prevented from being offset from the central axis of the rubber plug accommodation hole 3A.

With the rubber plug penetration device 1A having the above-described configuration, since the abutting portion 20b, which the distal end portion of the small diameter portion 35e of the rubber plug 35A can abut against in a state in which the end portion of the wire 34 is inserted into the inner hole 35a of the rubber plug 35A, is formed in the region around the penetrating hole portion 21A of the rubber plug restricting member 20A, the wire 34 is inserted into the rubber plug 35A with the distal end portion of the small diameter portion 35e of the rubber plug 35A abutting against the abutting portion 20b of the rubber plug restricting member 20A. Thus, the insertion position of the wire 34 is stable, and the wire quality is improved.

Although the present invention has been described in detail above, the descriptions above are in all respects illustrative, and the present invention is not limited to those descriptions. It should be understood that innumerable variations that are not described herein can be envisaged without departing from the scope of the present invention.

## Claims

1. A rubber plug penetration device for inserting a wire into a rubber plug, the rubber plug penetration device comprising:
a supply member having a rubber plug supply path through which the rubber plug can be supplied;
a wire holding member holding an end portion of the wire in an orientation in which the end portion of the wire is pointed toward the rubber plug;
a rubber plug holding member having a rubber plug accommodation hole for holding the rubber plug, the rubber plug holding member being disposed so as to move between a first position at which the rubber plug accommodation hole faces an opening of the rubber plug supply path at one end side of the rubber plug supply path and a second position which is located laterally to the first position and at which the end portion of the wire lies on an extension of a central axis of the rubber plug accommodation hole;
a wire inserting mechanism portion moving at least one of the wire and the rubber plug such that the wire and the rubber plug move relative to each other in a direction in which the wire and the rubber plug approach each other so that the end portion of the wire is inserted into an inner hole of the rubber plug; and
a rubber plug restricting member restricting a movement of the rubber plug held in the rubber plug accommodation hole in an insertion direction of the wire in a state in which the rubber plug holding member is located in the second position.

2. The rubber plug penetration device according to claim 1,
wherein an abutting portion is formed in the rubber plug holding member, and a front end portion of the rubber plug can abut against the abutting portion in a state in which the rubber plug holding member is located in the second position and in a state in which the rubber plug holding member is moving between the first position and the second position.

3. The rubber plug penetration device according to claim 1 or 2,
wherein a hole portion into which the end portion of the wire inserted into the inner hole of the rubber plug is inserted is formed in the rubber plug restricting member, and
a rear end portion of the rubber plug is inserted into the hole portion in a state in which the end portion of the wire is inserted into the inner hole of the rubber plug.

4. The rubber plug penetration device according to claim 1 or 2,
wherein a hole portion into which the end portion of the wire inserted into the inner hole of the rubber plug is inserted is formed in the rubber plug restricting member, and
an abutting portion is formed in a region around the hole portion of the rubber plug restricting member, and a rear end portion of the rubber plug can abut against the abutting portion in a state in which the end portion of the wire is inserted into the inner hole of the rubber plug.

5. The rubber plug penetration device according to any one of claims 1 to 4, further comprising:
a wire guide member disposed between the wire holding member and the rubber plug holding member, the wire guide member guiding the end portion of the wire extending from the wire holding member along the extension of the central axis of the rubber plug accommodation hole.

6. The rubber plug penetration device according to claim 5,
wherein an abutting portion is formed in the wire guide member, and the front end portion of the rubber plug held in the rubber plug accommodation hole can abut against the abutting portion in a state in which the rubber plug holding member is located in the first position and in a state in which the rubber plug holding member is moving between the first position and the second position.
